# EUROPEAN PATENT APPLICATION

(11) **EP 4 280 146 A1**
(43) Date of publication of application: **22.11.2023**
(21) Application number: 22174156.4
(22) Date of filing: 18.05.2022
(51) Int. Cl.: G06Q 30/06

(54) **COMPUTER-IMPLEMENTED METHOD AND SYSTEM FOR SECURING DATA**

(71) Applicant: To-Co B.V., 1132 HS Volendam (NL)
(72) Inventor: Nieuweboer, Thames Johannes Maria, 1132 HS Volendam (NL)
(74) Representative: Arnold & Siedsma

(57) **Abstract**

Computer-implemented method for securing data transmitted by a customer and/or a vendor in an electronic commerce process, comprising obtaining data representing economic commodity information and vendor information about an economic commodity to be offered to the customer and a corresponding vendor offering the economic commodity, respectively, storing the data in a database on a server, generating a unique encrypted Uniform Resource Locator ("URL") which points to the location of the data on the server, encoding the unique encrypted URL into a machine-readable code, and providing the code to the customer.

## Description

The present invention relates to a computer-implemented method for securing data transmitted by a customer and/or a vendor in an electronic commerce process. The present invention further relates to a data processing system for carrying out such a method.

In known electronic commerce processes, measures are in place to secure data transmitted by a customer and/or a vendor. Such measures include for instance utilizing SSL to authenticate and encrypt links between networked computers. Nonetheless, customers are usually still required to provide privacy-sensitive details regarding their identity, their e-mail address and their bank account to a vendor when placing an order for e.g. an economic commodity offered by the vendor. Moreover, the customer's and vendor's online activities regarding the purchase and selling of an economic commodity, respectively, can still often be tracked by analytics companies.

As a result, today's electronic commerce processes have the disadvantage that customer privacy is not sufficiently protected and that potential vendor trade secrets, contained in data about online commercial activities of customers and vendors, are not sufficiently secured.

It is therefore an object of the present invention to improve customer privacy protection and/or vendor trade secret security.

Thereto, the invention provides, according to a first aspect thereof, a computer-implemented method for securing data transmitted by a customer and/or a vendor in an electronic commerce process, comprising obtaining data representing economic commodity information and vendor information about an economic commodity to be offered to the customer and a corresponding vendor offering the economic commodity, respectively, storing the data in a database on a server, generating a unique encrypted Uniform Resource Locator ("URL") which points to the location of the data on the server, encoding the unique encrypted URL into a machine-readable code, and providing the code to the customer.

By creating a unique encrypted URL for each combination of an economic commodity and an associated vendor, the economic commodity can be obtained by the customer from the vendor without third parties being able to monitor the purchase process and infer the purchase behavior of the customer that can be derived from it.

In a preferred embodiment, the method further comprises providing an independent e-commerce platform through which the economic commodity can be vended by the vendor to the customer, and upon reading the code by the customer using suitable code reading means, directing the customer to the data on the server in a secure manner using the unique encrypted URL and, based on the data, providing the economic commodity and vendor information about the economic commodity and the corresponding vendor to the customer, wherein the step of providing the economic commodity and vendor information comprises presenting the economic commodity and vendor information on the e-commerce platform.

In a further preferred embodiment, the e-commerce platform comprises an online order environment, and the method further comprises enabling the customer to place an order for the economic commodity through the online order environment, comprising requesting the customer to enter customer details about the customer necessary to deliver the order to the customer, wherein the customer details exclude details about the customer's identity, and delivering the economic commodity to the customer exclusively on the basis of the customer details.

Preferably, the step of enabling the customer to place an order for the economic commodity through the online order environment includes generating any details not provided by the customer, though required by the vendor to be able to place the order. Such details may include a name or an e-mail address. In this way, the customer does not have to provide any privacy-sensitive information regarding his identity to the vendor.

Preferably, the customer details exclusively comprise a postal code and a street number.

In a preferred embodiment, the step of enabling the customer to place an order for the economic commodity through the online order environment comprises providing a unique randomized number representing details of the order. In this way, the order can be retrieved after placement of the order, despite that the vendor has no contact details of the customer other than its postal code and a street number.

In a preferred embodiment, the economic commodity information about the economic commodity to be offered comprises information about one or more attributes of the economic commodity. If the economic commodity is a product, the attributes may comprise a color and/or a size of the product. If the economic commodity is a subscription or a contract offered by the vendor, the attributes may comprise a subscription or contract period and/or conditions thereof.

In a preferred embodiment, the step of obtaining the data comprises obtaining the data online using an external identifier. Preferably, the external identifier comprises at least one of international article number and a price lookup number.

In a preferred embodiment, the code comprises a bar code. Preferably, the bar code comprises a matrix code, in particular a QR-code. More preferably, the URL is a shortened URL.

In a preferred embodiment, the economic commodity comprises one of a product and a service.

According to a second aspect, the invention provides a data processing system comprising means for carrying out the steps of the method of any one of the embodiments described above.

According to a third aspect, the invention provides a computer program product comprising instructions which, when the program is executed by a computer, cause the computer to carry out the steps of the method of any one of the embodiments described above.

According to a third aspect, the invention provides a computer-readable storage medium comprising instructions which, when executed by a computer, cause the computer to carry out the steps of the method of any one of the embodiments described above.

The present invention is further elucidated on the basis of the following figures which show preferred embodiments thereof and are not intended to limit the scope of protection of the invention in any way, wherein:
- figure 1 is a block diagram illustrating a system in accordance with a preferred embodiment of the present invention; and
- figure 2 is a flow chart illustrating an exemplary method of placing an order using the system of figure 1.

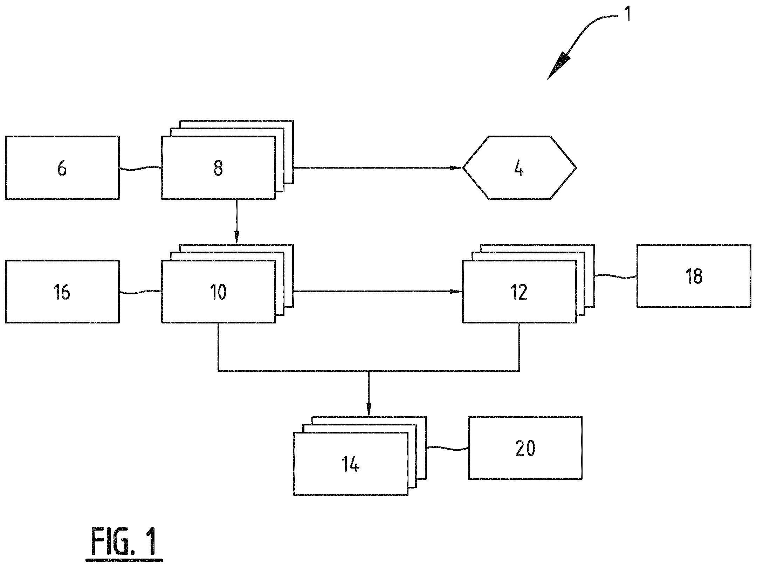

The system illustrated by the block diagram of figure 1 is a system 1 for offering an economic commodity to a customer. Any vendor 8, which may have its own online vending environment such as a web shop 4, may offer its products and/or services 10 through the system 1. Each vendor 8 may have one or more different shops 12 through which it offers its products and/or services 10 and the products and/or services 10 may come in different variants or have different attributes, such as different colors and/or sizes. The same product may be offered through different shops 12 and different products 10 may be offered through one and the same shop 12. The vendor 8 determines which product 10 is to be offered through which shop 12, such that combinations of products 10 and shops 12 can be defined. Each product 10 and each shop 12 may have a unique ID, hereinafter referred to as the product ID and the shop ID. Consequently, for each combination of a product 10 and a shop 12, there exists a unique combination of a product ID and a shop ID. On the basis of each combination of product ID and shop ID, the system generates a unique encrypted URL 14. Subsequently, each unique encrypted URL 14 is encoded into a QR code. As a result, the system 1 generates unique encrypted URLs 14 and associated QR codes for each unique product-shop combination.

The encrypted URL 14 thus contains information 20 about the product 10 and the shop 12 in each product-shop combination. In addition, the URL 14 may contain information 20 about the version of the generator used to generate the URL 14, such that it is known how the URL 14 is to be read when used. The URL 14 may further contain information 20 about any sales details, such as sellers or resellers through which the products are to be offered. Each generated encrypted URL 14 has a public part and a private part. The encryption of the URL 14 is such that a shortened URL is obtained having a private part that is as short as possible. This benefits the readability of the QR code in which the URL information is contained. The shorter the encrypted URL, the less data has to be encoded into the QR code. As the amount of data decreases, less modules are required to build the QR code, resulting in simpler and more readable QR codes.

Upon scanning a QR code using for instance a camera of my mobile phone, the unique encrypted URL 14 contained in the scanned QR code is decoded, which directs the customer to a webpage displaying at least the product 10 and the shop 12 of the unique product-shop combination. To be able to offer and sell the economic commodity, i.e. product, to the customer, various details about the vendors 8, products 10 and shops 12 are to be inputted into the system 1. Important vendor details 6 comprise vendor contact details and vendor bank account details, whereas important product details 16 include a title or a description, a price, a picture, and a stock amount of the product 10 as well as product attribute details, such as size and color of the product 10. Instead of products 10, also subscriptions and insurance contracts 10 or the like may be offered through system 1. An important shop detail 18 maybe the layout of the shop, which can represent an important part of the shop's trademark. Some details have to be displayed on the webpage, while others do not. The name of the product 10 and the name of the shop 12 as well as the price of the product 10 and a picture thereof are typically details that are displayed on the webpage to which the customer is directed when scanning the QR code, while the vendor details 6 and e.g. the stock amount may be kept hidden.

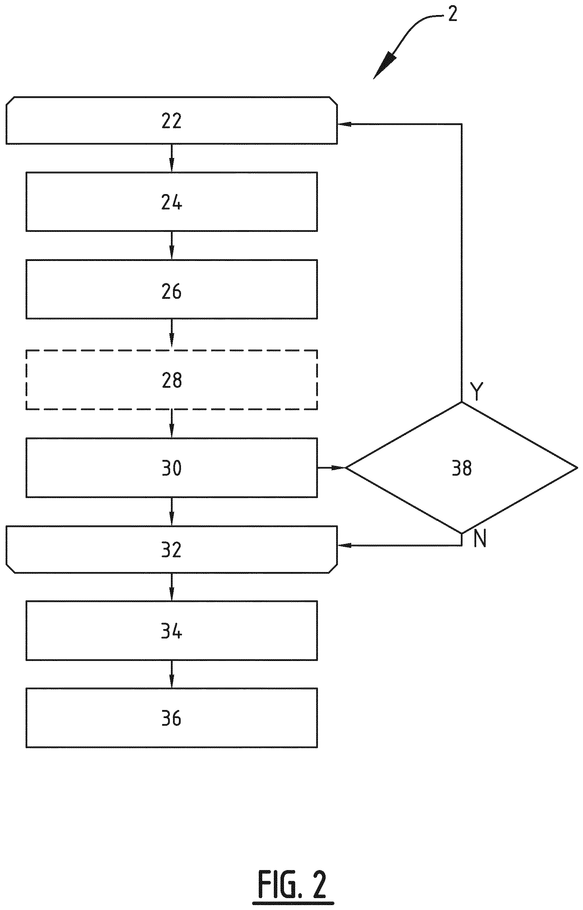

An exemplary method 2 of placing an order using the system 1 is represented by the flowchart of figure 2. Placing an order using system 1 is carried out as follows.

A customer scans a QR code (step 22) using for instance the camera of its mobile phone. The unique encrypted URL contained in the QR code is subsequently decoded by the mobile phone (step 24). Next, the encrypted URL is read by the mobile phone, which causes the system to render a webpage which displays the product and the shop of the unique product-shop combination on the basis of which the URL was generated (step 26), in particular the name and the price of the product and the name of the shop. Optionally, the webpage may also display product attributes, such as a color or size of the product, or service attributes such as a period or conditions of a subscription or insurance contract which may be offered through the system (step 28). Once the customer has selected its preferred attributes and has decided to purchase the product or service, the customer can add the item to a cart (step 30). If the customer would like to buy another product or service (decision node 38 → Y), the customer may scan another QR code (step 22) and repeat steps 24 to 34 for the other product or service. If the customer does not want to add any other item to the cart (decision node 38 → N), the product / service offering and selection part of method 2 is done (step 32). Next, the customer is directed to a payment check out page, in which the customer only has to provide its postal code and street number to finalize the order (step 34). These details are sent to the external web shop of the vendor, wherein system generates any details not provided by the customer, though required by the external web shop (step 36). This way, the customer does not have to provide any details about its identity, so that its privacy is protected. Finally, the customer pays for the selected products and/or services through system 1. Upon payment, the order is placed and the system generates unique randomized number representing details of the order. This number allows the customer of the system to retrieve details about the order after payment, despite that the vendor has no contact details of the customer other than its postal code and a street number

In other words, the system allows for obtaining an economic commodity, such as product or service (e.g. a subscription or contract), while preventing third parties from monitoring the purchase and preventing vendors from obtaining privacy-sensitive details from customers. The present invention thereby improves customer privacy protection and vendor trade secret security.

The present invention is by no means limited to the above described preferred embodiments thereof. The rights claimed are determined by the appended claims within the scope of which many modifications are conceivable.

## Claims

1. Computer-implemented method for securing data transmitted by a customer and/or a vendor in an electronic commerce process, comprising:
obtaining data representing economic commodity information and vendor information about an economic commodity to be offered to the customer and a corresponding vendor offering the economic commodity, respectively;
storing the data in a database on a server;
generating a unique encrypted Uniform Resource Locator ("URL") which points to the location of the data on the server;
encoding the unique encrypted URL into a machine-readable code; and
providing the code to the customer.

2. Method according to claim 1, further comprising:
providing an independent e-commerce platform through which the economic commodity can be vended by the vendor to the customer; and
upon reading the code by the customer using suitable code reading means:
directing the customer to the data on the server in a secure manner using the unique encrypted URL; and
based on the data, providing the economic commodity and vendor information about the economic commodity and the corresponding vendor to the customer,
wherein the step of providing the economic commodity and vendor information comprises presenting the economic commodity and vendor information on the e-commerce platform.

3. Method according to claim 2, wherein the e-commerce platform comprises an online order environment, and wherein the method further comprises:
enabling the customer to place an order for the economic commodity through the online order environment, comprising requesting the customer to enter customer details about the customer necessary to deliver the order to the customer, wherein the customer details exclude details about the customer's identity; and
delivering the economic commodity to the customer exclusively on the basis of the customer details.

4. Method according to claim 3, wherein the customer details exclusively comprise a postal code and a street number.

5. Method according to claim 3 or 4, wherein the step of enabling the customer to place an order for the economic commodity through the online order environment comprises providing a unique randomized number representing details of the order.

6. Method according to any one of claims 1 to 5, wherein the economic commodity information about the economic commodity to be offered comprises information about one or more attributes of the economic commodity.

7. Method according to any one of claims 1 to 6, wherein the step of obtaining the data comprises obtaining the data online using an external identifier.

8. Method according to claim 7, wherein the external identifier comprises at least one of international article number and a price lookup number.

9. Method according to any one of claims 1 to 8, wherein the code comprises a bar code.

10. Method according to claim 9, wherein the bar code comprises a matrix code, in particular a QR-code.

11. Method according to any one of the preceding claims, wherein the economic commodity comprises one of a product and a service.

12. Data processing system comprising means for carrying out the steps of the method of any one of claims 1 to 11.

13. Computer program product comprising instructions which, when the program is executed by a computer, cause the computer to carry out the steps of the method of any one of claims 1 to 11.

14. Computer-readable storage medium comprising instructions which, when executed by a computer, cause the computer to carry out the steps of the method of any one of claims 1 to 11.
